# EUROPÄISCHE PATENTSCHRIFT

(11) **EP 0 328 151 B1**
(45) Veröffentlichungstag und Bekanntmachung des Hinweises auf die Patenterteilung: **29.09.1993**
(21) Anmeldenummer: 89102416.8
(22) Anmeldetag: 13.02.1989
(51) Int. Cl.: G05D 23/19, F25D 21/00

(54) **Verfahren zur Steuerung einer Heizung, insbesondere einer Abtauheizung für Kälteanlagen**
Heating control method, particularly for a thawing device in a refrigeration installation
Procédé de commande pour chauffage en particulier pour un chauffage de dégivrage d'installations frigorifiques

(30) Priorität: 11.02.1988 DE 3804267
(43) Veröffentlichungstag der Anmeldung: 16.08.1989
(73) Patentinhaber: MEYER, Friedhelm, D-57319 Bad Berleburg (DE)
(72) Erfinder: MEYER, Friedhelm, D-57319 Bad Berleburg (DE)
(74) Vertreter: Klingseisen, Franz, Dipl.-Ing.

(56) Entgegenhaltungen:
- US-A- 4 627 245
- US-A- 4 689 965
- PATENT ABSTRACTS OF JAPAN, Band 7, Nr. 50 (M-197)[1195], 26. Februar 1983;& JP-A-57 198 939

## Beschreibung

Die Erfindung betrifft ein verfahren zur Steuerung einer Heizung nach dem Oberbegriff des Anspruchs 1.

Aus US-A-4,689,965 ist eine Abtausteuerung für eine Kühlvorrichtung bekannt, bei der abwechselnd gekühlt und abgetaut wird, wobei die Temperaturänderung des Verdampfers während des Abtauens festgestellt und die Zeitdauer bestimmt wird, in der die Temperaturänderung des Verdampfers im wesentlichen Null bleibt. Die Dauer der nachfolgenden Kühlung wird in Abhängigkeit von dieser Zeitdauer eingestellt.

Bei Kühl- bzw. Kälteanlagen wird zum Abtauen von sich am Verdampfer bildendem Reif oder Eis eine Abtauschaltuhr vorgesehen, die in festen Zeitabständen die Abtauheizung einschaltet. Es ist auch möglich, im Bereich des Verdampfers einen Eismelder vorzusehen, der bei Auftreten von Eis die Abtauheizung einschaltet. Dabei wird üblicherweise die Abtauheizung kontinuierlich betrieben, so daß die Abtauheizung vom Abtaubeginn bis zum Abtauende bei einem festgesetzten Temperaturwert von beispielsweise 10 oder 20°C dauernd angeschaltet bleibt. Dadurch wird dem Verdampfer und damit dem Kühlraum mehr Wärme zugeführt, als zum Abtauen benötigt wird. So kann bei einer üblichen Abtauheizung schon nach 10 Minuten eine Temperatur von 300°C an den Heizelementen erreicht werden. Dadurch wird Wasserdampf frei, der sich überall absetzt, Isolierungen beschädigt oder zerstört und sich auch auf dem Kühlgut selbst niederschlägt, wodurch dieses beeinträchtigt werden kann. Legt sich der Wasserdampf am Lüfterrad an, so wird dessen Lauf nach Festfrieren des Wasserdampfes beeinträchtigt. Aufgrund der zu hohen Energie- bzw. Wärmezufuhr durch die Abtauheizung steigt die Temperatur im Kühlraum über die Abschalttemperatur an. Nach dem Abtauen bedarf es längerer Zeit, um die überhöhte Temperatur im Kühlraum wieder auf Kühlniveau abzusenken. Auch bilden sich trotz der hohen Wärmezufuhr bei kontinuierlich eingeschalteter Abtauheizung Eisnester am Verdampfer, die nach einer gewissen Betriebsdauer zu Betriebsstörungen des Verdampfers führen.

Der Erfindung liegt die Aufgabe zugrunde, ein Verfahren der eingangs angegebenen Art so auszubilden, daß der Energieeinsatz beim Aufheizen des Raumes, insbesondere beim Abtauen in Kälteanlagen, verringert wird.

Diese Aufgabe wird durch die Merkmale im Kennzeichen des Anspruchs 1 gelöst. Durch Messen der Raumtemperatur in bestimmten Zeitabständen und Vergleichen des gemessenen Wertes mit dem vorhergehenden Meßwert wird festgestellt, ob sich die Raumtemperatur erhöht oder nicht, worauf im Falle einer Erhöhung der Raumtemperatur die Heizung abgeschaltet und das Trägheitsverhalten der Heizung für die weitere Erhöhung der Raumtemperatur ausgenutzt wird, das bei den bekannten Heizungsanlagen zu einer überhöhten Wärmezufuhr führt. Wenn ein Absinken der Raumtemperatur festgestellt wird, wird die Heizung wieder eingeschaltet oder bleibt eingeschaltet. Durch die in Zeitabständen erfolgende Überprüfung der Raumtemperatur wird die Wärmezufuhr auf das für den Abtauvorgang bei einer Kälteanlage erforderliche Mindestmaß beschränkt, wobei zudem die eingangs geschilderten Nachteile, wie Wasserdampffreisetzung, überhöhte Temperatur nach dem Abtauvorgang und Bildung von Eisnestern am Verdampfer, weitgehend ausgeschaltet werden.

Vorteilhafte Ausgestaltungen der Erfindung sind in der nachfolgenden Beschreibung und in den weiteren Ansprüchen angegeben.

Die Erfindung wird beispielsweise anhand der Zeichnung näher erläutert. Es zeigen
- Fig. 1: den Temperaturverlauf eines aufzuheizenden Raumes bei kontinuierlichem Betrieb der Abtauheizung nach dem Stand der Technik und
- Fig. 2: den Temperaturverlauf in dem aufzuheizenden Raum bei dem erfindungsgemäßen Betrieb der Abtauheizung.

In den Figuren ist auf der Abszisse die Zeit in Sekunden und auf der Ordinate die Temperatur in °C angegeben, wobei die wiedergegebene Kurve den beispielsweise durch einen Temperatursensor ermittelten Temperaturverlauf in dem aufzuheizenden Raum wiedergibt. Im Falle einer Kälteanlage befindet sich der Temperatursensor im Bereich des Verdampfers, an dem durch die Abtauheizung Reif und Eis entfernt werden soll, das sich während des Kältebetriebs gebildet hat. Der Temperatursensor selbst kann in beliebiger Weise ausgebildet sein. Es kann auch am Verdampfer ein Eismelder vorgesehen werden, der bei Auftreten von Reif oder Eis ein Signal zum Einschalten der Abtauheizung abgibt.

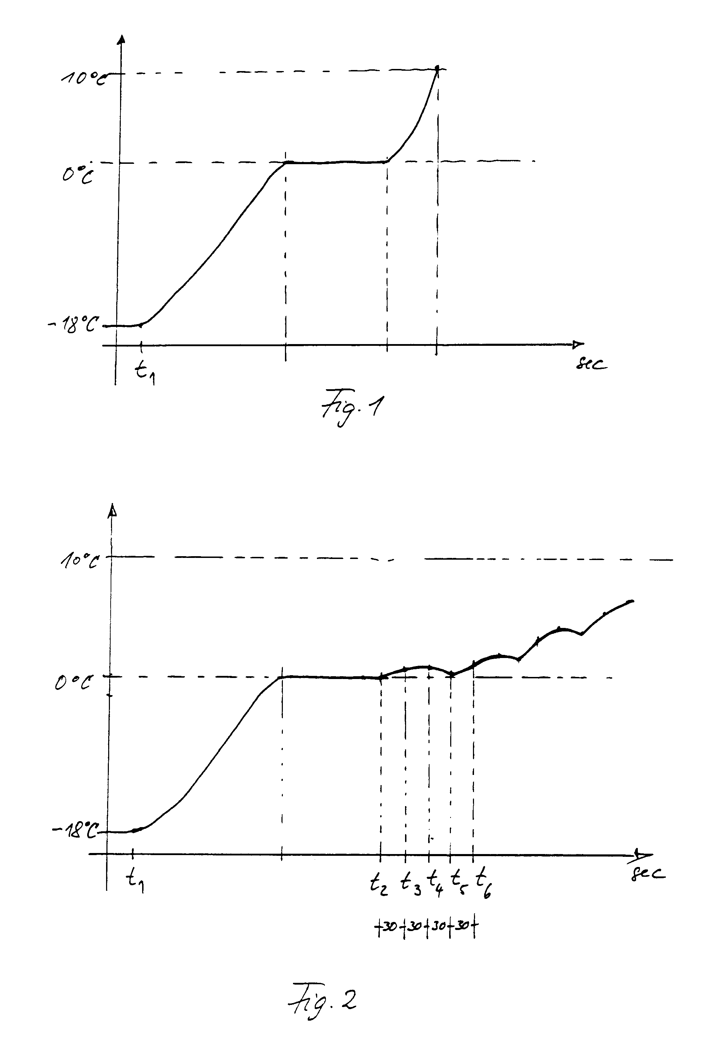

Kommt von einem solchen Eismelder oder einer Abtauschaltuhr der Befehl zum Abtauen, so wird beispielsweise bei einer Temperatur von -18°C die Abtauheizung eingeschaltet. Die zum Zeitpunkt t₁ eingeschaltete Abtauheizung bleibt nach dem Stand der Technik dauernd eingeschaltet, wie dies Fig. 1 wiedergibt. Zunächst durchläuft die Temperaur im Verdampfer einen sensiblen Bereich vom Abtaubeginn bis etwa 0°C, worauf sich ein latenter Bereich anschließt, in dem die Umwandlung der festen Eiskristalle in Wasser erfolgt. Am Ende des latenten Bereichs bei 0°C steigt die Temperatur wegen der dauernd eingeschalteten Abtauheizung schnell an, so daß in relativ kurzer Zeit das Abtauende bei 10°C erreicht wird. In diesem wiederum als sensiblen Bereich bezeichneten Abschnitt wird durch die zu hohe Wärmezufuhr Wasserdampf gebildet und es bilden sich Eisnester im Verdampfer, weil bei dem schnellen Hochheizen nicht alle Bereiche des Verdampfers erfaßt werden, insgesamt aber die Abschalttemperatur von beispielsweise 10°C in Abhängigkeit von der Anordnung des Temperaturfühlers erreicht ist. Nach dem Abschalten der Abtauheizung steigt dennoch durch das Trägheitsverhalten der Heizung die Temperatur im Verdampfer über die Abschalttemperatur hinaus.

Bei dem Betrieb der Abtauheizung nach der Erfindung bleibt die Abtauheizung vom Einschaltzeitpunkt t₁ bis zum Erreichen des latenten Bereichs um 0°C und während des latenten Bereiches dauernd eingeschaltet. Während oder am Ende des latenten Bereiches wird zum Zeitpunkt t₂ der durch den Temperatursensor gemessene Temperaturwert von beispielsweise 0°C in einer elektronischen Einrichtung gespeichert, worauf die Heizung zunächst abgeschaltet wird. Von der elektronischen Einrichtung wird beispielsweise nach 30 s erneut die Temperatur am Temperatursensor im Verdampfer abgefragt. Diese zum Zeitpunkt t₃ abgefragte Temperatur wird mit der vorhergehenden Temperatur bei t₂ verglichen. Wird eine Erhöhung der Temperatur t₃ um beispielsweise 0,1°C gegenüber der Temperatur t₂ festgestellt, so bleibt die Heizung abgeschaltet. Die Heizung, die zwischen t₁ und t₂ kontinuierlich eingeschaltet war, hat ein gewisses Trägheitsverhalten und heizt auch nach dem Abschalten bei t₂ noch eine gewisse Zeit den Verdampfer auf.

Nach der Ermittlung der Temperatur zum Zeitpunkt t₃ und dem Vergleich mit dem vorausgegangenen Meßwert wird der zum Zeitpunkt t₂ festgestellte Meßwert aus dem Speicher gelöscht und der Meßwert bei t₃ gespeichert. Nach einer Zeitspanne von 30 Sekunden wird zum Zeitpunkt t₄ erneut die Temperatur am Temperatursensor abgefragt. Liegt der Meßwert um beispielsweise 0,1 oder mehr als 0,1°C über dem vorhergehenden Meßwert bei t₃, so bleibt die Heizung weiterhin abgeschaltet, worauf der Meßwert bei t₃ gelöscht und der Meßwert bei t₄ gespeichert wird. Dieser Vorgang wiederholt sich so lange, bis bei einem erneuten Vergleich festgestellt wird, daß die Temperatur in dem zu beheizenden Raum beispielsweise um 0,1°C gegenüber dem vorhergehenden Meßwert abgesunken ist. In diesem Falle wird die Heizung wieder eingeschaltet, wie dies in dem Diagramm bei t₅ angedeutet ist.

Nach Wiedereinschalten der Heizung bei t₅ steigt die Temperatur in dem zu beheizenden Raum, so daß bei der erneuten Abfrage bei t₆ eine Temperatur festgestellt wird, die mehr als 0,1°C über dem vorher gespeicherten Meßwert bei t₅ liegt. Die Heizung wird hierauf abgeschaltet und die Temperaturabfrage in vorgegebenen Zeitabständen mit Vergleich des jeweils vorhergehenden Meßwerts wiederholt sich in der gleichen Weise. Erst wenn die Temperatur erneut bspw. um 0,1°C oder mehr absinkt, wird die Heizung wieder eingeschaltet.

Dieser Vorgang des Temperaturabfragens und des Vergleichs mit dem vorhergehenden Meßwert wird so lange durchgeführt, bis die Abschalttemperatur der Abtauheizung von beispielsweise 10°C in dem zu beheizenden Raum erreicht ist. Die Abtauheizung bleibt danach so lange abgeschaltet, bis vom Eismelder wieder ein Signal zum Abtauen abgegeben und die Abtauheizung eingeschaltet wird. Hierauf wiederholt sich der beschriebene Vorgang der Steuerung der Abtauheizung durch Ein- und Ausschalten in Abhängigkeit von einem Temperaturabfall oder -anstieg in vorbestimmten Zeitabständen. Auf diese Weise wird stufenweise die Restwärme der Abtauheizung ausgenutzt und nur stufenweise Heizenergie zum Abtauen zugeführt, so daß nach Erreichen der Abschalttemperatur der Heizung bei beispielsweise 10°C dem Kühlraum praktisch keine Wärme mehr durch das Trägheitsverhalten der Heizung zugeführt wird. Bei dem danach einsetzenden Kühlvorgang muß deswegen keine über der vorgegebenen Abschalttemperatur liegende Temperatur im Kühlraum abgebaut werden.

Durch diese Steuerung der Abtauheizung wird zwar für den Abtauvorgang eine längere Zeit benötigt als bei kontinuierlich eingeschalteter Abtauheizung nach dem Stand der Technik, jedoch wird durch den längeren Abtauvorgang die Bildung von Eisnestern am Verdampfer vermieden, weil sich die von der Abtauheizung abgegebene Wärme gleichmäßiger über den Verdampferbereich verteilten kann, während andererseits der Abtauvorgang nicht so lange dauert, daß hierdurch das Kühlgut beschädigt würde.

Die bei dem beschriebenen Ausführungsbeispiel angegebene Temperatur von 0°C für das erstmalige Abschalten der Abtauheizung bei t₂ stellt eine vorgewählte Temperatur dar, die auch auf einen anderen Temperaturwert eingestellt werden kann, je nachdem, ob ein bestimmter Raum oder Behälter aufgeheizt werden soll.

Wird ein Meßwert der Temperatur gespeichert und liegt der folgende Meßwert innerhalb des Bereiches von ± 0,1°C, um den gespeicherten Wert, so kann der vorhergehende Zustand der Heizung (ein- oder ausgeschaltet) beibehalten oder in jedem Falle die Heizung wieder eingeschaltet werden.

Die Restwärme einer üblichen Abtauheizung bei Kälteanlagen ist nach einer Einschaltdauer von 30 Sekunden so hoch, daß sich keine hohe Schalthäufigkeit bei der zuvor beschriebenen Abfrage in Zeitabständen von 30 Sekunden ergibt. Es ist aber auch möglich, alle 60 Sekunden die Temperatur im Kühlraum abzufragen und bei einer Temperaturdifferenz von ± 0,2°C gegenüber dem zuvor gespeicherten Wert die Heizung wieder ein- oder abzuschalten.

Die beschriebene Steuerung einer Heizung kann für verschiedene Verwendungszwecke eingesetzt werden, beispielsweise bei einem Heißwasserboiler, der auf eine bestimmte Temperatur aufgeheizt werden soll und diese Temperatur halten soll. Insbesondere ist diese Steuerung für Abtauheizungen bei Kälteanlagen, auch kleineren Kälteanlagen geeignet, wobei der Temperatursensor jeweils im Verdampfer bzw. dort angeordnet ist, wo sich Eis bilden kann, das abgetaut werden muß.

Im Falle einer Kälteanlage kann anstelle eines im Verdampfer angeordneten Temperatursensors, der ein elektrisches Signal entsprechend der festgestellten Temperatur abgibt, auch ein Druckfühler vorgesehen werden, der auf der Saugseite des Kompressors bzw. der Kälteanlage angeordnet wird. Da der Druck auf der Saugseite der Kälteanlage von der Temperatur des Verdampfers abhängig ist, kann der Druckwert in gleicher Weise zur Steuerung der Abtauheizung verwendet werden wie der von einem Temperatursensor gelieferte Temperaturwert. Ein solcher Druckfühler liefert ein elektrisches Signal, das in der elektronischen Steuereinrichtung wie das zuvor beschriebene Temperatursignal verarbeitet wird.

Bei einer abgewandelten Ausführungsform des Steuerverfahrens kann schon bei Einschalten der Abtauheizung zum Zeitpunkt t₁ die Temperatur fortlaufend in bestimmten Zeitabständen abgefragt werden, wobei die ermittelten Meßwerte gespeichert werden, so daß man den Verlauf der Temperaturkurve bzw. deren Steilheit erhält. Wird die Temperaturkurve im Bereich von 0°C flacher, so kann man daran erkennen, daß es sich um den latenten Bereich der Umwandlung von Eiskristallen in Wasser handelt, worauf der bei t₂ einsetzende Abfragezyklus der Temperatur selbsttätig einsetzen kann, ohne daß vorher ein Temperaturwert im Bereich von 0°C für das erstmalige Abschalten der Abtauheizung eingestellt wird.

Nach einer weiteren Abwandlung kann nach dem erstmaligen Abschalten der Abtauheizung bei t₂ die Steilheit des Temperaturverlaufs dadurch ermittelt werden, daß mehrere Meßwerte der Temperatur nacheinander gespeichert werden. Auf diese Weise ist es möglich, die Steilheit von aufeinanderfolgenden Kurvenabschnitten in einer bestimmten Zeiteinheit miteinander zu zu vergleichen, worauf die Heizung nur dann abgeschaltet wird, wenn ein bestimmter hoher Restwärmebetrag der vorhergehenden Heizperiode vorhanden ist, der durch einen steilen Kurvenverlauf erkennbar ist. In entsprechender Weise würde bei einem flachen Verlauf des betreffenden Kurvenabschnitts, der nur noch eine geringe Restwärme anzeigt, die Heizung wieder eingeschaltet.

Die Abtauheizung selbst ist üblicherweise als elektrische Heizung ausgebildet, es ist aber auch möglich, beispielsweise ein erwärmtes flüssiges Medium als Heizung zu verwenden.

## Patentansprüche

1. Verfahren zur Steuerung einer Abtauheizung für eine Kälteanlage, mit einem Temperatursensor, der mit einer Einrichtung zum Ein- und Abschalten der Heizung verbunden ist,
**dadurch gekennzeichnet,**
daß während des Betriebs der Heizung in bestimmten Zeitabständen die Temperatur des zu beheizenden Raumes gemessen wird, wobei jeweils ein gemessener Temperaturwert gespeichert und mit dem folgenden Meßwert verglichen wird, worauf die Heizung abgeschaltet wird, wenn der folgende Meßwert eine um einen bestimmten Betrag höhere Temperatur wiedergibt als der vorhergehende gespeicherte Meßwert, und die Heizung eingeschaltet wird oder eingeschaltet bleibt, wenn der folgende Meßwert eine um einen bestimmten Betrag niedrigere Temperatur wiedergibt als der vorhergehende, gespeicherte Meßwert.

2. Verfahren nach Anspruch 1,
dadurch gekennzeichnet,
daß nach Einschalten der Heizung bei einer bestimmten Einschalttemperatur erst nach Erreichen einer vorbestimmten Temperatur der weitere Temperaturverlauf in vorbestimmten Zeitabständen abgefragt und in Abhängigkeit davon die Heizung ein- bzw. abgeschaltet wird.

3. Verfahren nach den Ansprüchen 1 und 2,
dadurch gekennzeichnet,
daß im Falle einer Kühlanlage anstelle eines Temperatursensors im Verdampfer ein Druckfühler auf der Saugseite der Kälteanlage vorgesehen wird, um den Temperaturverlauf im Verdampfer und damit die Restwärme der Abtauheizung festzustellen.

## Claims

1. Process for controlling a defrosting heater for a refrigeration plant, having a temperature sensor which is connected to a device for switching the heater on and off, characterised in that during the operation of the heater the temperature of the space to be heated is measured at specific intervals of time, whilst a temperature level measured is stored and compared with the subsequent measurement, whereupon the heater is switched off if the subsequent measurement gives a temperature which is a certain amount higher than the measurement stored previously, and the heater is switched on or remains switched on if the subsequent measurement indicates a temperature which is a certain amount lower than the previous measurement stored.

2. Process according to claim 1, characterised in that after the heater has been switched on at a specific cut-in temperature, the further progress of the temperature is only scanned at predetermined intervals of time after a predetermined temperature has been reached and the heating is switched on or off accordingly.

3. Process according to claims 1 and 2, characterised in that, in the case of a refrigeration plant, instead of a temperature sensor in the evaporator a pressure sensor is provided on the intake end of the refrigeration plant, in order to measure the temperature changes in the evaporator and whereby establish the residual heat of the defrosting heater.

## Revendications

1. Procédé pour la commande d'un chauffage de dégivrage pour une installation frigorifique, avec un capteur de température qui est relié à un dispositif pour la mise en marche et le mise à l'arrêt du chauffage, caractérisé en ce que
pendant la fonctionnement du chauffage, la température de la pièce à chauffer est mesurée selon des intervalles de temps déterminés, moyennant quoi une valeur de température mesurée est respectivement mémorisée et elle est comparée avec le valeur de mesure suivante, le chauffage étant mis à l'arrêt lorsque la valeur de mesure suivante donne une température supérieure d'une somme déterminée par rapport à la valeur de mesure mémorisée ou stockée précédemment et la chauffage est mis en marche ou demeure en marche lorsque la valeur de mesure suivante donne une température inférieure d'une somme déterminée par rapport à la valeur de mesure mémorisée précédemment.

2. Procédé selon la revendication 1, caractérisé en ce qu'après la mise en marche du chauffage à une température de mise en marche déterminée uniquement après avoir atteint une température prédéterminée, l'allure ultérieure des températures est interrogée selon des intervalles de temps prédéterminés et le chauffage est mis en marche ou mis à l'arrêt de façon correspondante.

3. Procédé selon les revendications 1 et 2, caractérisé en ce que dans le cas d'une installation frigorifique, à la place d'un capteur de température dans l'évaporateur, il est prévu un capteur de pression sur le côté aspiration de l'installation frigorifique afin de déterminer l'allure de température dans l'évaporateur et ainsi la chaleur résiduelle du chauffage de dégivrage.
